# EUROPEAN PATENT APPLICATION

(11) **EP 4 614 403 A1**
(43) Date of publication of application: **10.09.2025**
(21) Application number: 23924147.4
(22) Date of filing: 27.09.2023
(51) Int. Cl.: G06N 20/00, G06T 5/00, G06T 7/00

(54) **MODEL USAGE EVALUATION METHOD, MODEL USAGE EVALUATION SYSTEM, AND MODEL USAGE EVALUATION PROGRAM**

(30) Priority: 20.02.2023 JP 2023024204
(71) Applicant: Hamamatsu Photonics K.K., Hamamatsu-shi, Shizuoka 435-8558 (JP)
(72) Inventor: ONISHI Tatsuya, Hamamatsu-shi, Shizuoka 435-8558 (JP); TSUCHIYA Satoshi, Hamamatsu-shi, Shizuoka 435-8558 (JP); TAKESHIMA Tomochika, Hamamatsu-shi, Shizuoka 435-8558 (JP); HIGUCHI Takafumi, Hamamatsu-shi, Shizuoka 435-8558 (JP); KATO Akari, Hamamatsu-shi, Shizuoka 435-8558 (JP)
(74) Representative: Hoffmann Eitle
(86) International application number: PCT/JP2023/035211
(87) International publication number: WO 2024/176503

(57) **Abstract**

Provided is a technique that enables appropriate use of an inference model generated by machine learning training.

A model usage evaluation method for evaluating use of an inference model that is generated by machine learning training and inputs information based on an image includes: a target image feature amount acquisition step of acquiring a feature amount of a target image used as an input to the inference model (S01, S02); a training image feature amount acquisition step of acquiring a feature amount of a training image used for training for generating the inference model (S03, S04); and an evaluation step of comparing the feature amount of the target image acquired in the target image feature amount acquisition step with the feature amount of the training image acquired in the training image feature amount acquisition step to evaluate the use of the inference model for the target image (S05 to S08).

## Description

### Technical Field

The present invention relates to a model usage evaluation method, a model usage evaluation system, and a model usage evaluation program that evaluate use of an inference model which is generated by machine learning training and inputs information based on an image.

### Background Art

In the related art, a technique is known that removes noise from an image using an inference model generated by machine learning training (for example, see Patent Literature 1). That is, a technique is known that removes noise from an image using artificial intelligence (AI).

### Citation List

### Patent Literature

Patent Literature 1: International Publication No. 2022/172506

### Summary of Invention

### Technical Problem

However, noise removal using the inference model is not necessarily effective for all images. When a structure of an image to be subjected to noise removal is similar to a structure of a training image used for training for generating the inference model, it is possible to appropriately remove noise from the image. On the other hand, when these structures are significantly different, there is a concern that noise will not be appropriately removed from the image. In addition, the same problem can also occur in inference models used for purposes other than noise removal.

An embodiment of the present invention has been made in view of the above, and an object of the embodiment of the present invention is to provide a model usage evaluation method, a model usage evaluation system, and a model usage evaluation program that enable appropriate use of an inference model generated by machine learning training.

### Solution to Problem

In order to achieve the above object, according to an embodiment of the present invention, there is provided a model usage evaluation method for evaluating use of an inference model that is generated by machine learning training and inputs information based on an image. The model usage evaluation method includes: a target image feature amount acquisition step of acquiring a feature amount of a target image used as an input to the inference model; a training image feature amount acquisition step of acquiring a feature amount of a training image used for training for generating the inference model; and an evaluation step of comparing the feature amount of the target image acquired in the target image feature amount acquisition step with the feature amount of the training image acquired in the training image feature amount acquisition step to evaluate the use of the inference model for the target image.

In the model usage evaluation method according to the embodiment of the present invention, the feature amount of the target image and the feature amount of the training image are compared to evaluate the use of the inference model. The use of this evaluation makes it possible to appropriately use the inference model for the target image. For example, when it is considered that the inference model can appropriately remove noise from the target image, it is possible to use the inference model.

In the target image feature amount acquisition step, the target image may be acquired, and information based on the acquired target image may be input to a feature amount acquisition model generated by machine learning training to acquire the feature amount of the target image. According to this configuration, it is possible to appropriately and reliably acquire the feature amount of the target image. As a result, it is possible to appropriately and reliably implement the embodiment of the present invention.

The feature amount acquisition model may be a model outputting a feature vector which is a feature amount of an image related to input information. According to this configuration, it is possible to easily and appropriately compare the feature amounts. As a result, it is possible to easily and appropriately implement the embodiment of the present invention.

In the evaluation step, a distance or angle between the feature amount of the target image and the feature amount of the training image may be calculated in order to compare the feature amounts. In the evaluation step, it may be determined whether or not the feature amount of the target image is included in a class of the training image generated from the feature amount of the training image in order to compare the feature amounts. According to these configurations, it is possible to appropriately compare the feature amount of the target image with the feature amount of the training image. As a result, it is possible to perform an appropriate evaluation.

The inference model may be a model used to remove noise from an image related to input information. According to this configuration, it is possible to appropriately remove noise from the target image.

The inference model may be a model used to detect an abnormality in an image related to input information. According to this configuration, it is possible to appropriately detect an abnormality in the target image.

The inference model may be a model used to estimate a focus position at a time of focusing corresponding to an image related to input information. According to this configuration, it is possible to appropriately estimate the focus position corresponding to the target image.

In the evaluation step, as the evaluation of the use of the inference model for the target image, it may be determined whether or not the use of the inference model for the target image is appropriate or whether or not the inference model needs to be retrained. According to this configuration, it is possible to appropriately and reliably evaluate the use of the inference model for the target image.

An embodiment of the present invention can be described as an invention of the model usage evaluation method as described above and can also be described as inventions of a model usage evaluation system and a model usage evaluation program as described below. These are substantially the same inventions except that these belong to different categories and have the same operations and effects.

That is, according to an embodiment of the present invention, there is provided a model usage evaluation system for evaluating use of an inference model that is generated by machine learning training and inputs information based on an image. The model usage evaluation system includes: a target image feature amount acquisition means for acquiring a feature amount of a target image used as an input to the inference model; a training image feature amount acquisition means for acquiring a feature amount of a training image used for training for generating the inference model; and an evaluation means for comparing the feature amount of the target image acquired by the target image feature amount acquisition means with the feature amount of the training image acquired by the training image feature amount acquisition means to evaluate the use of the inference model for the target image.

In addition, according to an embodiment of the present invention, there is provided a model usage evaluation program causing a computer to operate as a model usage evaluation system for evaluating use of an inference model that is generated by machine learning training and inputs information based on an image. The model usage evaluation program causes the computer to function as: a target image feature amount acquisition means for acquiring a feature amount of a target image used as an input to the inference model; a training image feature amount acquisition means for acquiring a feature amount of a training image used for training for generating the inference model; and an evaluation means for comparing the feature amount of the target image acquired by the target image feature amount acquisition means with the feature amount of the training image acquired by the training image feature amount acquisition means to evaluate the use of the inference model for the target image.

### Advantageous Effects of Invention

According to the embodiment of the present invention, it is possible to appropriately use an inference model generated by machine learning training.

### Brief Description of Drawings

FIG. 1 is a diagram showing a configuration of a model usage evaluation system according to an embodiment of the present invention.
FIG. 2 is a figure showing an example of a structure of an image.
FIG. 3 is a figure showing an example of a training image and noise removal by an inference model generated using the training image.
FIG. 4 is a figure showing another example of the training image and the noise removal by the inference model generated using the training image.
FIG. 5 is a figure schematically showing an example of a feature amount acquisition model for acquiring a feature vector from an image.
FIG. 6 is a figure showing a feature vector of a target image and feature vectors of training images.
FIG. 7 is a diagram for explaining evaluation using a one-class SVM.
FIG. 8 is a figure showing a training image and the like used for verifying the evaluation according to the embodiment.
FIG. 9 is a figure showing a training image and a verification image used for verifying the evaluation according to the embodiment.
FIG. 10 is a graph showing distances between the feature vector of the training image and the feature vectors of the training image and the verification images.
FIG. 11 is a figure for explaining verification using the verification image.
FIG. 12 is a graph showing a PSNR of a noise-removed image based on the verification image and the distance between the feature vectors.
FIG. 13 is a diagram for explaining an example in which an inference model is a model used for abnormality detection.
FIG. 14 is a diagram for explaining an example in which the inference model is a model used to estimate a focus position at the time of focusing.
FIG. 15 is a flowchart showing a model usage evaluation method which is a process executed by the model usage evaluation system according to the embodiment of the present invention.
FIG. 16 is a diagram showing a configuration of a model usage evaluation program according to an embodiment of the present invention together with a recording medium.

### Description of Embodiments

Hereinafter, embodiments of a model usage evaluation method, a model usage evaluation system, and a model usage evaluation program according to the present invention will be described in detail with reference to the drawings. In addition, in the description of the drawings, the same elements are denoted by the same reference numerals, and a redundant description thereof will be omitted.

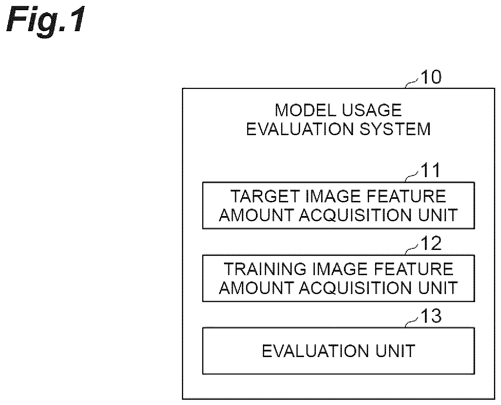

FIG. 1 shows a model usage evaluation system 10 according to this embodiment. The model usage evaluation system 10 is a system (apparatus) evaluating the use of an inference model (a learning model, a trained model). The inference model is a model that inputs information based on an image and performs predetermined inference. The inference model is generated in advance by machine learning training. However, the evaluation of the use of the inference model in this embodiment is performed based on a training image used to generate the inference model and does not require the inference model, which will be described below. Therefore, after the evaluation in this embodiment, the training image used for the evaluation may be used to generate the inference model.

For example, the inference model is a model used for noise removal (denoising, noise reduction) for the image related to the input information. In this case, for example, the inference model inputs an image including noise and outputs a noise-removed image or (an image of) the noise included in the image. Further, the inference model may perform inferences other than the above.

For example, the inference model includes a neural network. The neural network may be a multi-layer neural network. That is, the inference model may be an inference model generated by deep learning. In addition, the neural network may be a convolutional neural network (CNN).

In the inference model, neurons for inputting information based on an image are provided in an input layer. For example, the information input to the inference model is a pixel value (brightness value) of each pixel in the image. In this case, neurons corresponding to the number of pixels in the image are provided in the input layer, and the pixel value of the corresponding pixel is input to each neuron. Furthermore, the information input to the inference model may be information other than the pixel value of each pixel as long as it is based on the image.

In the inference model, neurons for outputting inference results are provided in an output layer. For example, information output from the inference model is a pixel value of each pixel in the noise-removed image or a pixel value of each pixel of (image of) the noise included in the image related to the information input to the inference model. In this case, neurons corresponding to the number of pixels in the image are provided in the output layer, and the pixel value of the corresponding pixel is output from each neuron. In addition, the information output from the inference model may be information other than the pixel value of each pixel as long as it indicates the inference results.

Further, the inference model may be configured by any structure other than the neural network as long as it is generated by machine learning training and performs the above-described input and output.

It is assumed that the inference model is used as a program module which is a portion of artificial intelligence software. The inference model is used, for example, in a computer including a processor and a memory, and the processor of the computer operates in response to a command from the model stored in the memory. For example, the processor of the computer operates to input information to the model, to perform calculation corresponding to the model, and to output results from the model, in response to the command. Specifically, the processor of the computer operates to input information to the input layer of the neural network, to perform calculation based on parameters, such as weighting coefficients for learning, in the neural network, and to output the results from the output layer of the neural network, in response to the command.

Training images are used for training for generating the inference model. The training images may be generated by image generation simulations according to the related art. For example, when the above-described inference model for noise removal is generated, a noise image obtained by artificially adding noise to the training image prepared in advance is generated. Machine learning training is performed, using information based on the generated noise image as an input to the inference model and information based on the training image, that is, the image without including noise, as an output from the inference model, to generate the inference model. Alternatively, machine learning training is performed, using the information based on the generated noise image as an input to the inference model and information based on the image of only the noise added to the training image as an output from the inference model, to generate the inference model. In addition, the generation of the inference model using the training image may be performed by a method other than the above.

The inference model targeted in this embodiment may be the inference model according to the related art. In addition, the generation of the inference model by machine learning training may also be performed by the method according to the related art. The generation of the inference model and the use of the inference model may be performed independently of the model usage evaluation system 10 according to this embodiment. That is, in an apparatus other than the model usage evaluation system 10 according to this embodiment, the generation of the inference model and the use of the inference model may be performed. However, in the same apparatus as the model usage evaluation system 10 according to this embodiment, either or both of the generation of the inference model and the use of the inference model may be performed.

The performance of the inference model depends on the training image used to generate the inference model and a target image used for inference. For example, when the inference model is used for noise removal, the noise removal performance of the inference model depends on the training image and the target image to be subjected to noise removal. Specifically, the noise removal performance depends on the structures of these images.

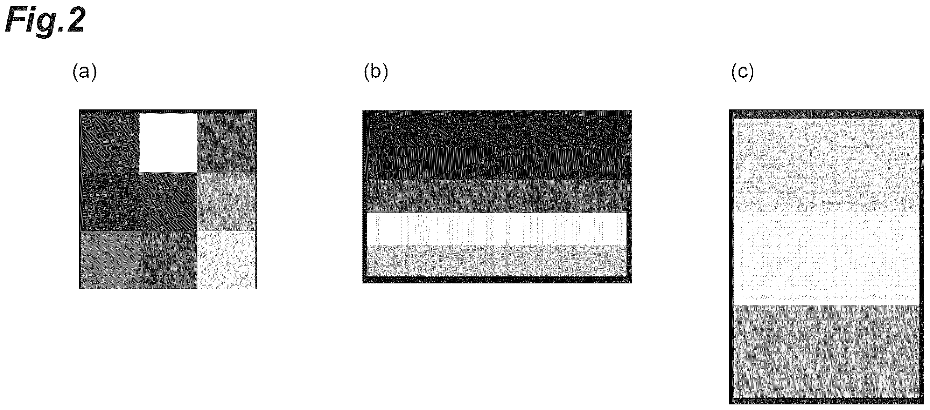

Examples of the structures of these images are shown in FIG. 2. The examples of the structures shown in FIG. 2 are examples of structures generated by simulations. FIG. 2(a) shows a brightness change structure in which a pixel value varies greatly depending on the position of an area of an image. FIG. 2(b) shows a structure of a resolution chart. FIG. 2(c) shows a structure of a chain chart.

When the structure of the training image and the structure of the target image are similar to each other, it is possible to appropriately remove noise. When the inference model is generated, using training images with various structures makes it possible to accommodate various structures of target images. However, it is difficult to use training images of all structures to generate the inference model.

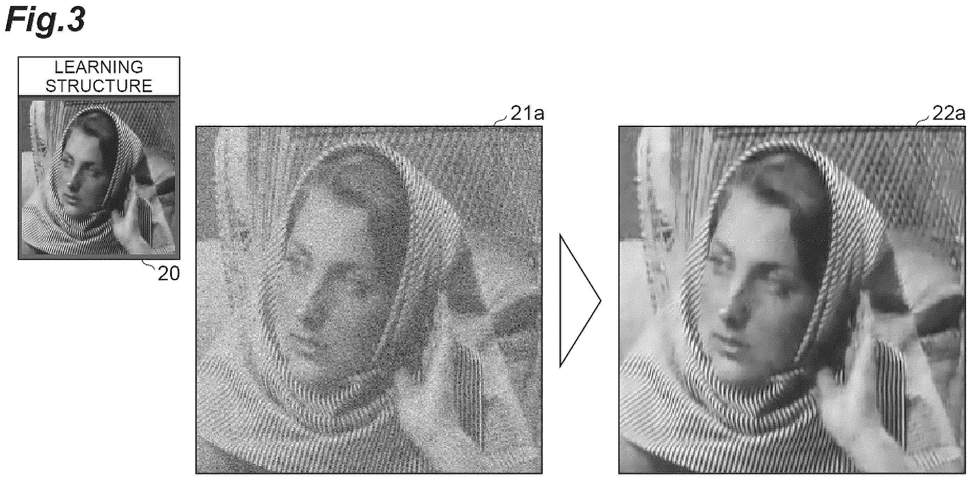

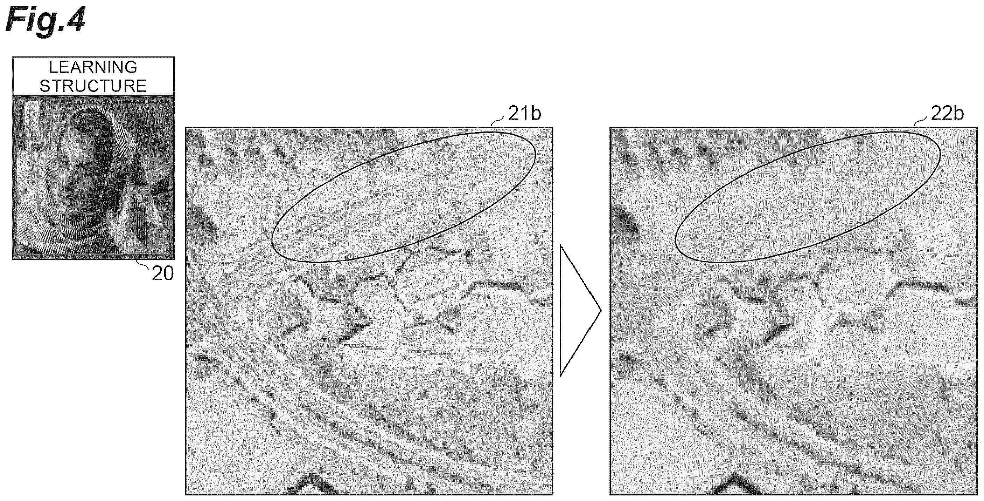

FIGS. 3 and 4 show an example of a case where an inference model is generated using a training image 20 (learning structure) and noise-removed images 22a and 22b are generated from target images 21a and 21b to be subjected to noise removal. As shown in FIG. 3, when the structure of the training image 20 and the structure of the target image 21a are similar to each other, that is, when the inference model has learned the structure, it is possible to appropriately remove noise. As shown in FIG. 4, when the structure of the training image 20 and the structure of the target image 21a are not similar to each other, that is, when the inference model has not learned the structure, it is not possible to appropriately remove noise, and it can be seen that, particularly, a structure in an elliptical black frame portion of the noise-removed image 22b has been blurred and disappeared.

The evaluation of the use of the inference model by the model usage evaluation system 10 takes the above into account, and the use of the inference model for the target image is evaluated. The evaluation is, for example, the evaluation of whether or not the use of the inference model for the target image is appropriate or whether or not the inference model needs to be retrained (machine learning needs to be retrained) using a training image for the target image. In a case where it is considered that the performance of the inference model is appropriately demonstrated when the inference model is used for the target image, it is evaluated that the use of the inference model for the target image is appropriate or that the inference model does not need to be retrained. In a case where it is considered that the performance of the inference model is not appropriately demonstrated when the inference model is used for the target image, it is evaluated that the use of the inference model for the target image is not appropriate or that the inference model needs to be retrained.

The evaluation by the model usage evaluation system 10 makes it possible to appropriately use the inference model. For example, when the inference model is used to remove noise in the target image, it is possible to appropriately perform noise removal.

The model usage evaluation system 10 includes a computer according to the related art that includes hardware components including a processor, such as a central processing unit (CPU), a memory, and a communication module. These components are operated by a program or the like to implement the functions of the model usage evaluation system 10 which will be described below. The computer constituting the model usage evaluation system 10 may be a computer system including a plurality of computers. In addition, the computer may also be configured by cloud computing or edge computing.

Next, the functions of the model usage evaluation system 10 according to this embodiment will be described. As shown in FIG. 1, the model usage evaluation system 10 includes a target image feature amount acquisition unit 11, a training image feature amount acquisition unit 12, and an evaluation unit 13.

The target image feature amount acquisition unit 11 is a target image feature amount acquisition means for acquiring a feature amount of the target image used as an input to the inference model. The target image feature amount acquisition unit 11 may acquire the target image and input information based on the acquired target image to a feature amount acquisition model generated by machine learning training to acquire the feature amount of the target image. The feature amount acquisition model may be a model outputting a feature vector which is a feature amount of an image related to input information.

The feature amount of the target image acquired by the target image feature amount acquisition unit 11 is information indicating the features of the target image. For example, the feature amount is a feature vector which is a vector having a preset number of dimensions. In addition, the feature amounts may be any feature amounts that can be compared with each other as described below, in addition to the feature vectors.

For example, the target image feature amount acquisition unit 11 acquires the feature amount of the target image as follows. The target image feature amount acquisition unit 11 acquires the target image related to the evaluation of the inference model. The target image may be acquired, for example, by receiving a target image input operation of a user of the model usage evaluation system 10 or by receiving the target image transmitted from another system such as a system performing inference using the inference model. Furthermore, the target image may be acquired by other methods.

The target image may be any image that can be used for inference using the inference model. For example, the target image may be an image to be subjected to noise removal using the inference model as described above. The target image may be an X-ray image obtained by performing X-ray imaging on an object to be imaged (sample). When the X-ray image is used as the target image, the target image captured under conditions of as high a dose as possible and as low noise as possible may be used in order to clarify the structure of the target image and to perform appropriate evaluation. In addition, the target image may be an image captured using visible light or an image captured using infrared light.

The target image feature amount acquisition unit 11 acquires a feature amount from the acquired target image. For example, the target image feature amount acquisition unit 11 stores a feature amount acquisition model in advance in order to acquire the feature amount. The feature amount acquisition model is generated in advance by machine learning training. The feature amount acquisition model is a model that inputs information based on an image and is for acquiring the feature amount of the input image.

The feature amount acquisition model includes, for example, a neural network. The neural network may be a multi-layer neural network. That is, the feature amount acquisition model may be generated by deep learning. In addition, the neural network may be a convolutional neural network.

In the feature amount acquisition model, neurons for inputting information based on an image are provided in an input layer. For example, the information input to the feature amount acquisition model is a pixel value (brightness value) of each pixel of the image. In this case, neurons corresponding to the number of pixels in the image are provided in the input layer, and the pixel value of the corresponding pixel is input to each neuron. Furthermore, the information input to the feature amount acquisition model may be information other than the pixel value of each pixel as long as it is based on the image.

In the feature amount acquisition model, neurons for outputting the feature amount are provided in an output layer. For example, information output from the feature amount acquisition model is a feature vector. In this case, neurons corresponding to the number of dimensions of the feature vector are provided in the output layer, and the value of each corresponding element of the feature vector is output from each neuron. In addition, the information output from the feature amount acquisition model may be information other than the value of each element of the feature vector as long as it is the feature amount. Further, the feature amount acquisition model may not output the feature amount and may be any model that can calculate the feature amount from information output from the feature amount acquisition model or information obtained by calculation using the feature amount acquisition model.

In addition, the feature amount acquisition model may be configured as a structure other than the neural network as long as it is generated by machine learning training and performs the above-described input and output.

It is assumed that the feature amount acquisition model is used as a program module which is a portion of artificial intelligence software. The feature amount acquisition model is used, for example, in a computer including a processor and a memory, and the processor of the computer operates in response to a command from the model stored in the memory. For example, the processor of the computer operates to input information to the model, to perform calculation corresponding to the model, and to output results from the model, in response to the command. Specifically, the processor of the computer operates to input information to the input layer of the neural network, to perform calculation based on parameters, such as weighting coefficients for learning, in the neural network, and to output the results from the output layer of the neural network, in response to the command.

The feature amount acquisition model may be an existing model that is generated by the machine learning method according to the related art and is used to acquire the feature amount of input information or may be a model using the existing model. For example, the feature amount acquisition model may be a model, such as ResNet50, ResNet101, or Efficient Net, or may be a model based on the above-described model. The feature amount acquisition model may be a model used to identify an object included in an image or may be a model using the above-described model. The use of this model as the feature amount acquisition model makes it possible to acquire the feature amount of the target image appropriate for evaluating the inference model.

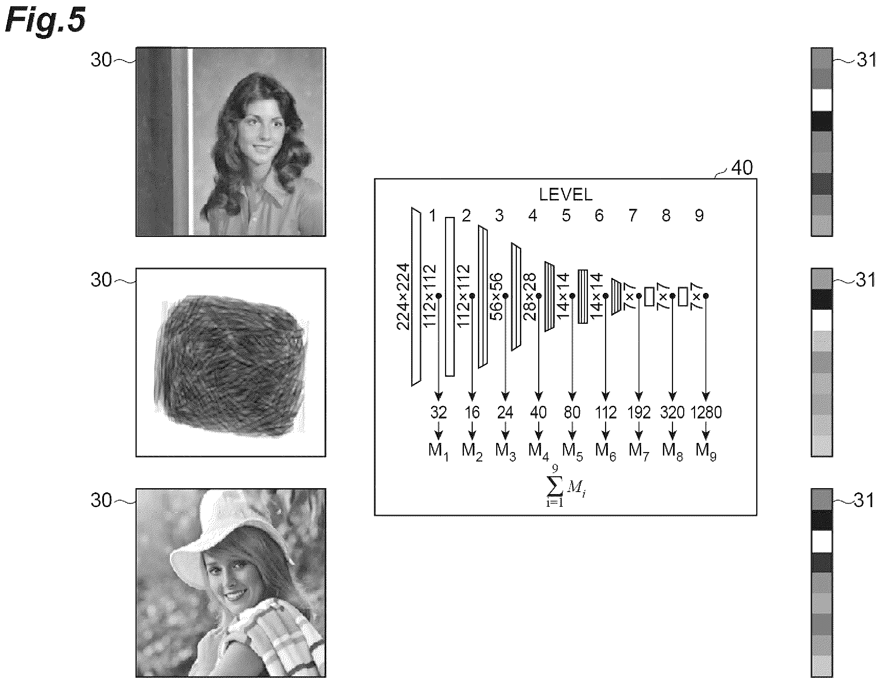

FIG. 5 schematically shows the acquisition of a feature vector 31 from a target image 30 by a feature amount acquisition model 40. In FIG. 5, in the feature vector 31, the value of each element is represented by density (the same applies to the subsequent feature vectors). The feature amount acquisition model 40 shown in FIG. 5 uses Efficient Net. The feature amount acquisition model 40 extracts a final layer of each level in Efficient Net, calculates an average for each channel using global pooling, and converts the averages into a vector to obtain the feature vector 31.

The target image feature amount acquisition unit 11 may acquire the feature amount of the target image by a method other than the above. For example, the target image feature amount acquisition unit 11 may acquire the feature amount from the target image by a preset method, without using the feature amount acquisition model. In addition, the target image feature amount acquisition unit 11 may acquire the feature amount of the target image, without acquiring the target image. In this case, for example, the target image feature amount acquisition unit 11 may acquire the feature amount of the target image generated in another system or the like, by the same method as that used to acquire the target image. The target image feature amount acquisition unit 11 outputs the acquired feature amount of the target image to the evaluation unit 13.

The training image feature amount acquisition unit 12 is a training image feature amount acquisition means for acquiring the feature amount of the training image used for training for generating the inference model.

The feature amount of the training image acquired by the training image feature amount acquisition unit 12 is information indicating the features of the training image. The feature amount of the training image corresponds to the feature amount of the target image. For example, the feature amount of the training image has the same format as the feature amount of the target image and is generated by the same method as the feature amount of the target image. For example, when the feature amount of the target image is a feature vector, the feature amount of the training image is also a feature vector.

For example, the training image feature amount acquisition unit 12 acquires the feature amount of the training image as follows. The training image feature amount acquisition unit 12 acquires the training image used for training for generating the inference model. The training image may be acquired, for example, by receiving a training image input operation of the user of the model usage evaluation system 10 or by receiving the training image transmitted from another system such as a system generating the inference model. In addition, the training image may be acquired by a method other than the above. When there are a plurality of training images, the training image feature amount acquisition unit 12 may acquire the plurality of training images.

The training image may be used indirectly for training for generating the inference model. For example, as in the above-described generation of the inference model for noise removal, an image directly used to generate the inference model may be an image obtained by adding artificial noise to the training image.

The training image feature amount acquisition unit 12 acquires the feature amount from the acquired training image. The training image feature amount acquisition unit 12 acquires the feature amount of the training image in the same manner as the target image feature amount acquisition unit 11 acquires the feature amount from the target image. For example, when the feature amount acquisition model is used to acquire the feature amount of the target image, the same feature amount acquisition model is also used to acquire the feature amount of the training image. When there are a plurality of training images, the training image feature amount acquisition unit 12 acquires the feature amount of each of the training images.

The training image feature amount acquisition unit 12 may acquire the feature amount of the training image by a method other than the above. For example, the training image feature amount acquisition unit 12 may acquire the feature amount from the training image by a preset method, without using the feature amount acquisition model. In addition, the training image feature amount acquisition unit 12 may acquire the feature amount of the training image without acquiring the training image. In this case, for example, the training image feature amount acquisition unit 12 may acquire the feature amount of the training image generated in another system or the like, by the same method as that used to acquire the training image. Furthermore, the feature amount of the training image may be stored in advance in the model usage evaluation system 10, and the training image feature amount acquisition unit 12 may read the stored feature amount of the training image to acquire the feature amount. The training image feature amount acquisition unit 12 outputs the acquired feature amount of the training image to the evaluation unit 13.

The evaluation unit 13 is an evaluation means for comparing the feature amount of the target image acquired by the target image feature amount acquisition unit 11 with the feature amount of the training image acquired by the training image feature amount acquisition unit 12 to evaluate the use of the inference model for the target image. The evaluation unit 13 may calculate a distance or angle between the feature amount of the target image and the feature amount of the training image in order to compare the feature amounts. The evaluation unit 13 may determine whether or not the feature amount of the target image is included in a class of the training image generated from the feature amount of the training image in order to compare the feature amounts. As the evaluation of the use of the inference model for the target image, the evaluation unit 13 may determine whether or not the use of the inference model for the target image is appropriate or whether or not the inference model needs to be retrained.

The comparison between the feature amounts by the evaluation unit 13 can correspond to the estimation of the above-described similarity between the structure of the target image and the structure of the training image. When the result of the comparison between the feature amounts by the evaluation unit 13 shows that it is estimated that the structure of the target image and the structure of the training image are similar to each other (in this case, it is considered that the performance of the inference model is appropriately demonstrated), it is evaluated that the use of the inference model for the target image is appropriate or that the inference model does not need to be retrained. When the result of the comparison between the feature amounts by the evaluation unit 13 shows that it is estimated that the structure of the target image and the structure of the training image are not similar to each other (in this case, it is considered that the performance of the inference model is not appropriately demonstrated), it is evaluated that the use of the inference model for the target image is not appropriate or that the inference model needs to be retrained.

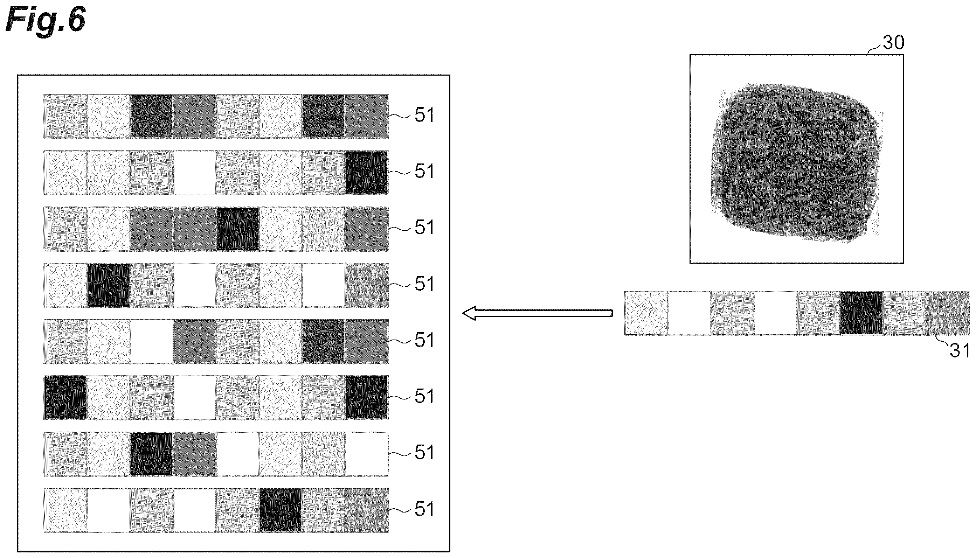

For example, the evaluation unit 13 evaluates the use of the inference model for the target image as follows. The evaluation unit 13 inputs the feature amount of the target image from the target image feature amount acquisition unit 11. The evaluation unit 13 inputs the feature amount of the training image from the training image feature amount acquisition unit 12. The evaluation unit 13 calculates the distance or angle between the feature amount of the target image and the feature amount of the training image. As shown in FIG. 6, for example, the evaluation unit 13 calculates the distance or angle between the feature vector 31, which is the feature amount of the target image 30, and each of feature vectors 51, which are the feature amounts of a plurality of training images. Specifically, the evaluation unit 13 calculates the Euclidean distance or the Mahalanobis distance as the distance between the feature vectors 31 and 51. Alternatively, the evaluation unit 13 calculates cosine similarity as the angle between the feature vectors 31 and 51. The evaluation unit 13 determines the shortest distance among the calculated distances as the distance to be used for evaluation. Alternatively, the evaluation unit 13 determines the smallest angle among the calculated angles as the angle to be used for evaluation.

An example of calculating the distance between the feature vectors 31 of the target images 30 shown in FIG. 5 will be described. The upper, middle, and lower images 30 are images of (1) a person, (2) pasta, and (3) a person, respectively. The distance between (1) the person and (2) the pasta is 1.22, the distance between (1) the person and (3) the person is 0.53, and the distance between (3) the person and (2) the pasta is 0.87. As described above, the images of the persons tend to be closer to each other, and the images of different features tend to be farther apart from each other.

The evaluation unit 13 compares the calculated distance or angle with a preset threshold value. When the calculated distance or angle is equal to or less than the threshold value, the evaluation unit 13 evaluates that the use of the inference model for the target image is appropriate or that the inference model does not need to be retrained. In this case, it is considered that the structure of the target image and the structure of the training image are similar to each other and that the performance of the inference model is adequately demonstrated. When the calculated distance or angle is greater than the threshold value, the evaluation unit 13 evaluates that the use of the inference model for the target image is not appropriate or that the inference model needs to be retrained. In this case, it is considered that the structure of the target image and the structure of the training image are not similar to each other and that the performance of the inference model is not adequately demonstrated.

Alternatively, the evaluation unit 13 generates the class of the training image from the feature amounts of the training images and determines whether or not the feature amount of the target image is included in the generated class. For example, the evaluation unit 13 uses a one-class support vector machine (SVM) for the determination. Specifically, the evaluation unit 13 generates the class of the training image from the feature vectors, which is the feature amounts of the training images, using the one-class SVM. The evaluation unit 13 determines whether or not the feature vector, which is the feature amount of the target image, is included in the class of the training image.

When the feature vector of the target image is included in the class of the training image, the evaluation unit 13 evaluates that the use of the inference model for the target image is appropriate or that the inference model does not need to be retrained. In this case, it is considered that the structure of the target image and the structure of the training image are similar to each other and that the performance of the inference model is adequately demonstrated. When the feature vector of the target image is not included in the class of the training image, the evaluation unit 13 evaluates that the use of the inference model for the target image is not appropriate or that the inference model needs to be retrained. In this case, it is considered that the structure of the target image and the structure of the training image are not similar to each other and that the performance of the inference model is not adequately demonstrated.

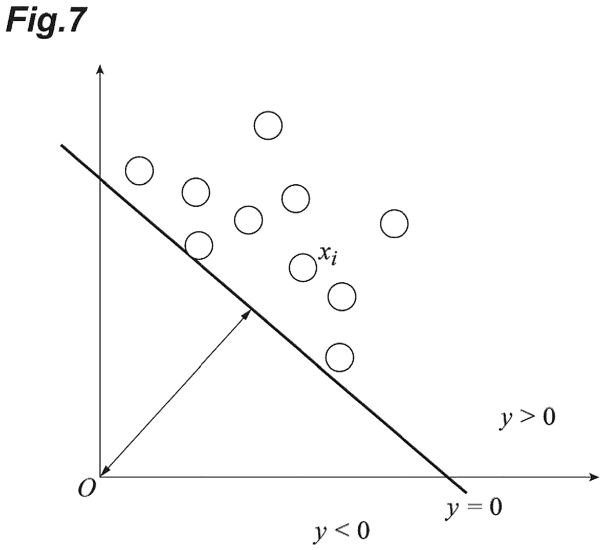

FIG. 7 shows a graph in which the feature vectors of the training images are schematically disposed in a two-dimensional space. Each xi represented by a circle in FIG. 7 is the feature vector of the training image. The evaluation unit 13 calculates a class boundary (y = 0 in the example shown in FIG. 7) from the feature vectors of the training images. When the feature vector of the target image is located on the side of the class of the training image relative to the calculated boundary (when the feature vector of the target image is in a range of y > 0 in the example shown in FIG. 7), it is determined that the feature vector of the target image is included in the class of the training image. When the feature vector of the target image is not located on the side of the class of the training image relative to the calculated boundary (when the feature vector of the target image is in a range of y < 0 in the example shown in FIG. 7), it is determined that the feature vector of the target image is not included in the class of the training image.

The evaluation unit 13 outputs information indicating the evaluation result. For example, the evaluation unit 13 outputs the information indicating the evaluation result in a format that can be recognized by the user of the model usage evaluation system 10 (for example, display or audio output). The user of the model usage evaluation system 10 determines the use of the inference model for the target image with reference to the output from the model usage evaluation system 10. For example, when the information indicating that the use of the inference model for the target image is appropriate is output, the user of the model usage evaluation system 10 uses the inference model for the target image. Furthermore, when the information indicating that the inference model needs to be retrained is output, the user of the model usage evaluation system 10 retrains the inference model for the target image.

The information indicating the evaluation result may be output by a method other than the above. For example, the information may be output (transmitted) to another system (apparatus) or another module. When it is evaluated that the use of the inference model for the target image is appropriate, the evaluation unit 13 may control a system performing inference using the inference model such that the system performs inference for the target image.

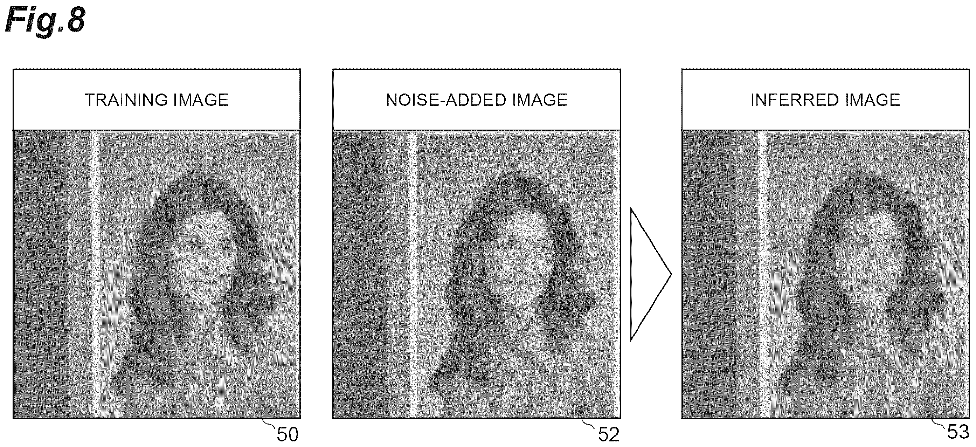

The verification of the evaluation by the model usage evaluation system 10 according to this embodiment will be described below. The evaluation was verified using the image shown in FIG. 8. Machine learning training was performed using a training image 50 shown in FIG. 8 to generate an inference model for noise removal. In addition, FIG. 8 shows an example in which noise removal was performed on a noise image 52 obtained by adding noise to the training image 50, using the inference model, to obtain a noise-removed inferred image 53. Since the structure of the noise image 52 is the same as the structure of the training image 50 used to generate the inference model, it is possible to perform appropriate noise removal as shown in FIG. 8.

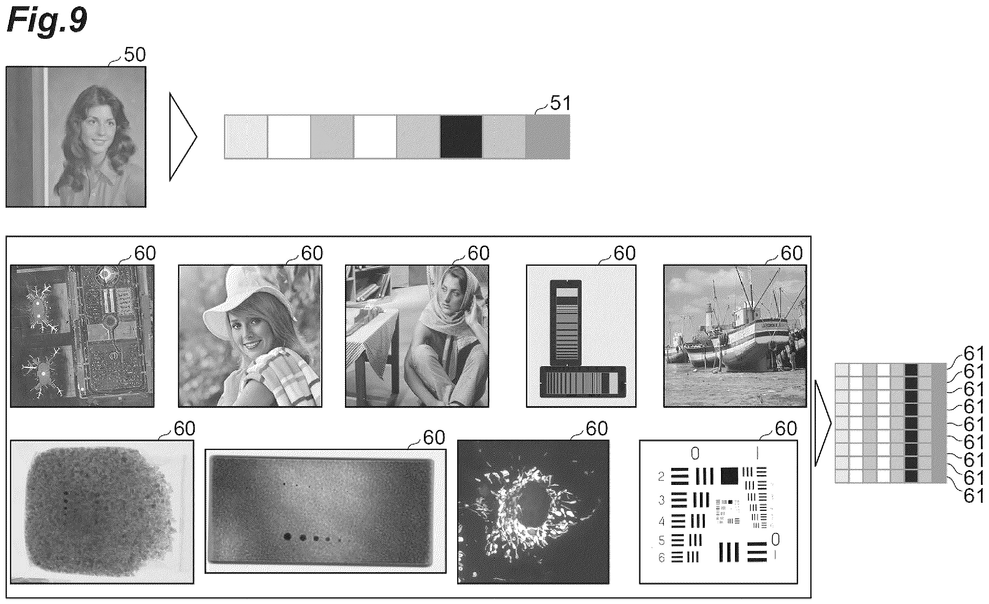

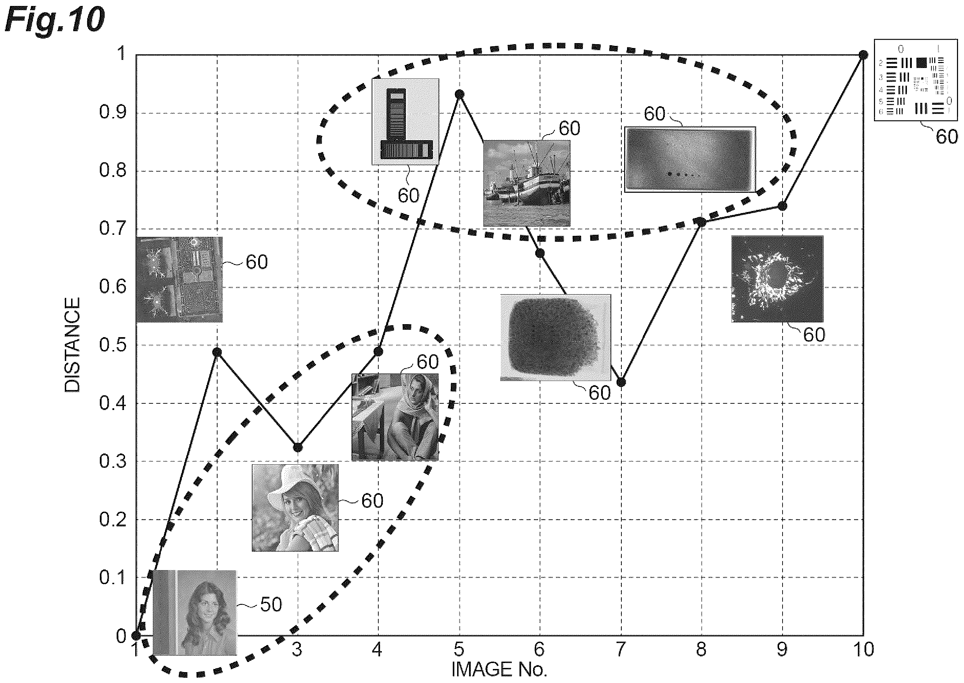

In addition, various verification images 60 were prepared as shown in FIG. 9. As shown in FIG. 9, feature vectors 51 and 61 of the training image 50 and the verification images 60 according to this embodiment were calculated. FIG. 10 is a graph showing the distances between the feature vector 51 of the training image 50 and the feature vectors 51 and 61 of these images 50 and 60 according to this embodiment. In FIG. 10, the training image 50 is referred to as image No. 1, and the verification images 60 are referred to as image No. 2 to No. 10. As shown in FIG 10, the distances between the training image 50 and the images of persons (images No. 3 and No. 4 of the verification images 60) similar to the training image 50 are small, and the distances between the training image 50 and the images of landscapes, charts, and the like (images No. 5, No. 6, and No. 8 of the verification images 60) significantly different from the training image 50 are large. As described above, in this embodiment, the distance corresponds to the similarity between the structures of the images.

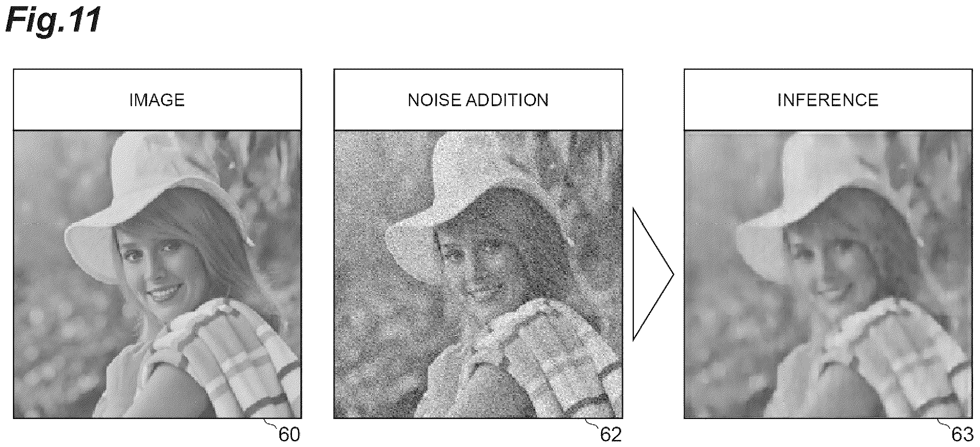

Further, as shown in FIG. 11, noise images 62 obtained by adding noise to each verification image 60 were generated, and noise was removed by the inference model to obtain noise-removed inferred images 63. In this noise removal, it was evaluated how well the noise was removed while maintaining the structure of the image using a peak signal-to-noise ratio (PSNR) of the inferred image 63. The PSNR is an index value indicating the degree of degradation of the image. As the value of the PSNR is larger, the degree of degradation is smaller. The PSNR is often used as an objective evaluation scale.

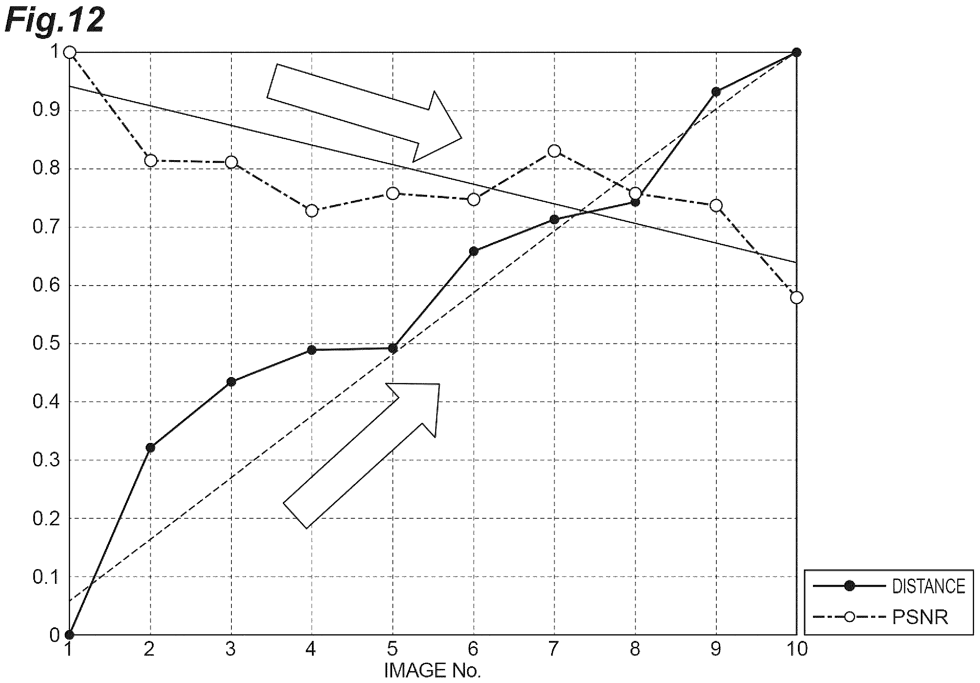

FIG. 12 is a graph showing the PSNRs of the noise-removed inferred images 53 and 63 corresponding to the training image 50 and the verification image 60. In this graph, the verification images 60 are rearranged in ascending order of the distance between the feature vectors 51 and 61 whose image Nos. are show in FIG. 10. As shown in the graph of FIG. 12, a correlation is observed in which, as the distance between the feature vectors 51 and 61 is shorter, the PSNR is higher. As the distance between the feature vectors 51 and 61 is longer, the PSNR is lower. This indicates that the noise removal performance of the inference model is poor for the images 60 (noise images 62) where the distance between the feature vectors 51 and 61 is long. In this case, as in this embodiment, it is reasonable to conclude that the use of the inference model is not appropriate or that the inference model needs to be retrained.

In the above-described embodiment, the inference model is used for noise removal. However, the inference model may be used for other purposes. For example, the inference model may be a model used to detect an anomality in an image related to input information.

This inference model is used for, for example, a process that captures an image of a manufactured product and detects an abnormality in the product from the captured image. For example, the inference model inputs an image including a product to be subjected to abnormality detection and outputs information indicating whether or not the product is abnormal (for example, the presence or absence of an abnormality or the degree of abnormality). In this case, an image of a good product without any abnormalities (good product image) may be used as the training image 50 to generate the inference model. The use of the inference model for the target image, which is the image of the product, may also be evaluated by the model usage evaluation system 10 in the same manner as in the above-described embodiment.

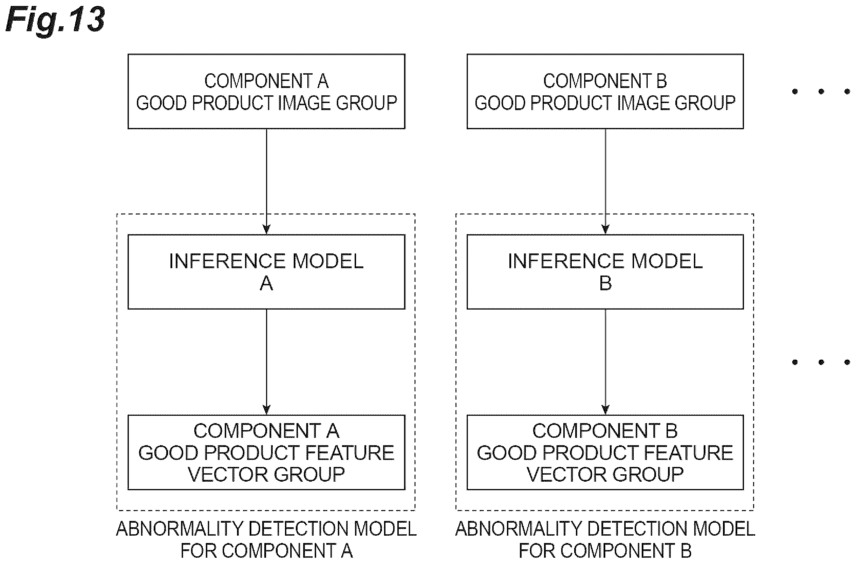

In addition, the inference model may be prepared in advance for each component of a product, and abnormality detection may be performed for each component using the inference model for each component. As shown in FIG. 13, good product images of each component (component A, component B, ···) are used for machine learning training to generate an inference model (abnormality detection model). Feature vectors (good product feature vector group) acquired from the good product images for each inference model (type of component) are used for the evaluation by the model usage evaluation system 10.

In addition, for the type of component for which the inference model has not been generated in advance, abnormality detection may be performed using the existing inference model for another type of component. In this case, an inference model to be used for abnormality detection may be determined from a plurality of existing inference models based on the evaluation by the model usage evaluation system 10. As in the above-described embodiment, for each inference model, the evaluation unit 13 evaluates the use of the inference model for the target image which is an image of a component for which there is no corresponding inference model. The evaluation unit 13 determines an inference model evaluated to be appropriate for use for the target image as the inference model to be used for abnormality detection.

When there are a plurality of inference models evaluated to be appropriate for use, the evaluation unit 13 may determine an inference model having the most desirable index value (for example, the above-described distance or angle) used for the evaluation among these inference models as the inference model to be used for abnormality detection. For example, the evaluation unit 13 determines the inference model having the smallest distance or angle as the inference model to be used for abnormality detection. When it is evaluated that the use of any of the inference models is not appropriate, the evaluation unit 13 outputs information indicating the fact. In this case, the evaluation unit 13 may output information indicating that it is necessary to generate the inference model for that type of component.

Further, the inference model may be a model used to estimate a focus position at the time of focusing corresponding to an image related to input information. For example, this inference model is used to estimate a focus position at the time of focusing from a captured (out-of-focus) image. When the focus position at the time of focusing is known, imaging can be performed at the focus position again to obtain an in-focus image. Imaging can be automatically performed at the estimated focus position at the time of focusing to achieve autofocus. This estimation is used, for example, in an inspection device that captures an image of a product and inspects the product from the image or an observation device that captures an image of a biological sample and observes the captured image of the biological sample.

For example, the inference model inputs an (out-of-focus) image and outputs information indicating the focus position at the time of focusing corresponding to the image (for example, a difference between an imaging position when an image was captured and the focus position at the time of focusing, or a focal length at the time of focusing). The use of the inference model for the target image, which is an (out-of-focus) image, may also be evaluated by the model usage evaluation system 10 in the same manner as in the above-described embodiment.

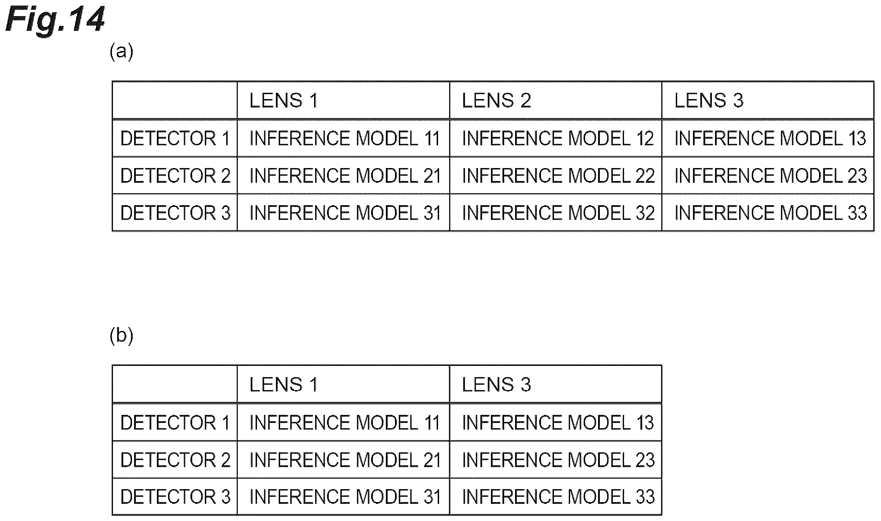

In addition, the inference model may be prepared in advance for each imaging condition of an (out-of-focus) image, and the estimation of the focus position at the time of focusing may be performed for each imaging condition using the inference model for each imaging condition. As shown in FIG. 14(a), the imaging conditions are, for example, a combination of the types of detector (for example, an imaging element) and lens of an imaging device. Further, the imaging conditions may be other than the above and may be, for example, magnification (low magnification, high magnification, or the like) at the time of imaging.

In this case, the image captured under the corresponding imaging conditions (a combination of the types of detector and lens of the imaging device at the time of shipment) is used as the training image 50 for machine learning training to generate the inference model. The feature vector obtained from the training image 50 for each inference model (imaging condition) is used for the evaluation by the model usage evaluation system 10.

In addition, even for the imaging conditions for which the inference model has not been generated in advance, the existing inference models for other imaging conditions may be used to estimate the focus position at the time of focusing. For example, as shown in FIG. 14(b), it is assumed that, for the detector and the lens, inference models corresponding to combinations of detectors 1 to 3 and lenses 1 and 3 are prepared in advance. On the other hand, for a combination of detector 1 and lens 2 for which the inference model has not been prepared, an inference model used to estimate the focus position at the time of focusing may be determined from a plurality of existing inference models, based on the evaluation by the model usage evaluation system 10. As shown in FIG. 14(b), since there are existing inference models for detector 1, an inference model 11 (an inference model corresponding to detector 1 and lens 1) and an inference model 13 (an inference model corresponding to detector 1 and lens 3), which only differ in lens, are used as candidates for the inference model used to estimate the focus position at the time of focusing.

The evaluation unit 13 evaluates the use of the candidate inference models for the target image in the same manner as in the above-described embodiment. The evaluation unit 13 determines an inference model evaluated to be appropriate for use for the target image as the inference model used to estimate the focus position at the time of focusing.

When there are a plurality of inference models evaluated to be appropriate for use, the evaluation unit 13 may determine an inference model having the most desirable index value (for example, the above-described distance or angle) used for the evaluation among these inference models as the inference model used to estimate the focus position at the time of focusing. For example, the evaluation unit 13 determines the inference model having the smallest distance or angle as the inference model used to estimate the focus position at the time of focusing. For example, when the inference model 11 has the smallest distance or angle, the inference model 11 is determined as the inference model used to estimate the focus position at the time of focusing. When the inference model 13 has the smallest distance or angle, the inference model 13 is determined as the inference model used to estimate the focus position at the time of focusing. When it is evaluated that the use of any of the inference models is not appropriate, the evaluation unit 13 may output information indicating the fact. In that case, the evaluation unit 13 may output information indicating that it is necessary to generate the inference model for the imaging conditions. The above is the functions of the model usage evaluation system 10 according to this embodiment.

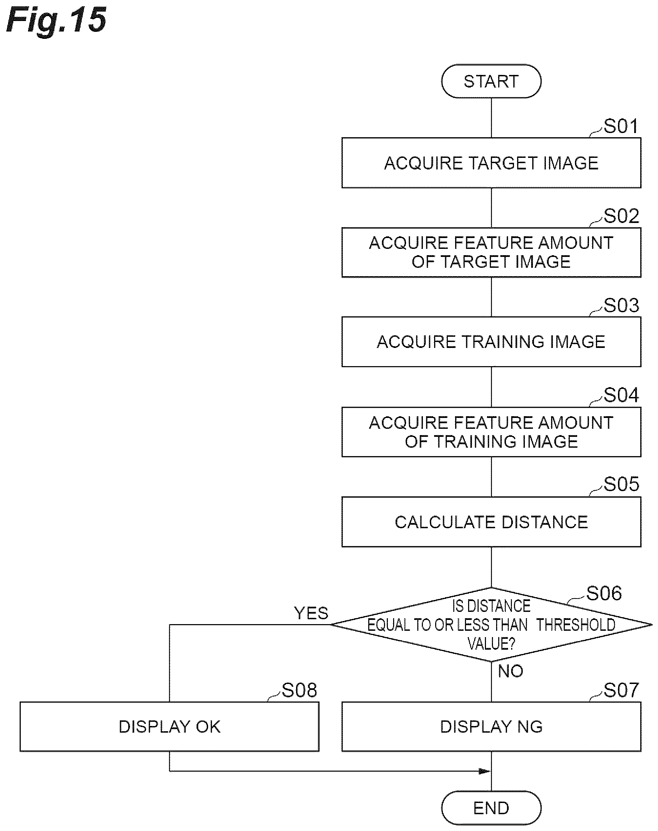

Next, a model usage evaluation method which is a process executed by the model usage evaluation system 10 according to this embodiment (an operation method performed by the model usage evaluation system 10) will be described with reference to a flowchart shown in FIG. 15.

In this process, the target image feature amount acquisition unit 11 acquires the target image (S01, a target image feature amount acquisition step). Then, the target image feature amount acquisition unit 11 acquires a feature amount from the target image (S02, the target image feature amount acquisition step). The feature amount of the target image is acquired, for example, by inputting information based on the target image to the feature amount acquisition model.

In addition, the training image feature amount acquisition unit 12 acquires the training image (S03, a training image feature amount acquisition step). Then, the training image feature amount acquisition unit 12 acquires a feature amount from the training image (S04, the training image feature amount acquisition step). The feature amount of the training image is acquired, for example, by inputting information based on the training image to the feature amount acquisition model. In addition, since the process of acquiring the feature amount of the target image (S01 and S02) and the process of acquiring the feature amount of the training image (S03 and S04) can be performed independently of each other, they are not necessarily performed in the above-described order.

Then, the evaluation unit 13 compares the feature amount of the target image with the feature amount of the training image to evaluate the use of the inference model for the target image. Specifically, for example, the distance between the feature amount of the target image and the feature amount of the training image is calculated (S05, an evaluation step). Then, the calculated distance is compared with the threshold value (S06, the evaluation step). When the distance is greater than the threshold value (NO in S06), it is evaluated that the use of the inference model for the target image is not appropriate or that the inference model needs to be retrained, and information indicating the fact is displayed (S07). That is, it is evaluated that the use of the inference model for the target image is NG, and information indicating the fact is displayed.

When the distance is equal to or less than the threshold value (YES in S06), it is evaluated that the use of the inference model for the target image is appropriate or that the inference model does not need to be retrained, and information indicating the fact is displayed (S08). That is, it is evaluated that the use of the inference model for the target image is OK, and information indicating the fact is displayed. The above is the process executed by the model usage evaluation system 10 according to this embodiment.

In this embodiment, the feature amount of the target image is compared with the feature amount of the training image to evaluate the use of the inference model. The use of this evaluation makes it possible to appropriately use the inference model for the target image. For example, when it is considered that the noise of the target image can be appropriately removed by the inference model as described above, it is possible to use the inference model. Alternatively, when it is considered that the noise of the target image is not capable of being appropriately removed, it is possible to retrain the inference model.

Further, the feature amount may be acquired by the feature amount acquisition model as in this embodiment. This configuration makes it possible to appropriately and reliably acquire the feature amount of the target image. As a result, it is possible to appropriately and reliably implement the embodiment of the present invention.

Furthermore, the feature amount acquisition model may output the feature vector as in this embodiment. This configuration makes it possible to easily and appropriately compare the feature amounts. As a result, it is possible to appropriately and reliably implement the embodiment of the present invention. However, the feature amount acquisition model may output a feature amount other than the feature vector. In addition, the feature amount may be acquired without using the feature amount acquisition model. Further, the feature amounts of the target image and the training image may be acquired, without acquiring the target image and the training image.

Furthermore, as in this embodiment, the distance or angle between the feature amount of the target image and the feature amount of the training image may be calculated in order to compare the feature amounts. In addition, it is determined whether or not the feature amount of the target image is included in the class of the training image by the one-class SVM or the like in order to compare the feature amounts. These configurations make it possible to appropriately compare the feature amount of the target image with the feature amount of the training image. As a result, it is possible to perform an appropriate evaluation.

As in this embodiment, the inference model may be a model used to remove noise from an image. This configuration makes it possible to appropriately remove noise from the target image. In addition, as in this embodiment, the inference model may be a model used to detect any abnormality in an image. This configuration makes it possible to appropriately detect an abnormality in the target image. Further, as in this embodiment, the inference model may be a model used to estimate a focus position at the time of focusing corresponding to an image. This configuration makes it possible to appropriately estimate the focus position corresponding to the target image. However, the inference model is not limited to the above and may be any model that is generated by machine learning training and inputs information based on an image.

As in this embodiment, as the evaluation of the use of the inference model for the target image, it may be determined whether or not the use of the inference model for the target image is appropriate or whether or not the inference model needs to be retrained. This configuration makes it possible to appropriately and reliably evaluate the use of the inference model for the target image. However, the evaluation of the use of the inference model for the target image may be other than the above.

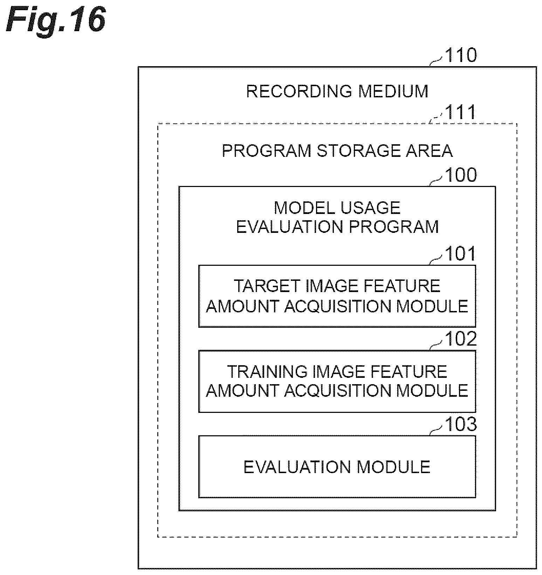

Next, a model usage evaluation program for performing the above-described series of processes by the model usage evaluation system 10 will be described. As shown in FIG. 16, a model usage evaluation program 100 is stored in a program storage area 111 formed in a computer-readable recording medium 110 that is inserted into the computer and accessed or that is provided in the computer. The recording medium 110 may be a non-transitory recording medium.

The model usage evaluation program 100 includes a target image feature amount acquisition module 101, a training image feature amount acquisition module 102, and an evaluation module 103. Functions implemented by executing the target image feature amount acquisition module 101, the training image feature amount acquisition module 102, and the evaluation module 103 are the same as the functions of the target image feature amount acquisition unit 11, the training image feature amount acquisition unit 12, and the evaluation unit 13 of the model usage evaluation system 10, respectively.

In addition, a portion or all of the model usage evaluation program 100 may be transmitted through a transmission medium, such as a communication line, and may be received and recorded (including installation) by another device. Furthermore, each module of the model usage evaluation program 100 may not be installed in one computer, but may be installed in any one of a plurality of computers. In this case, the above-described series of processes is performed by a computer system formed by the plurality of computers.

The model usage evaluation method, the model usage evaluation system, and the model usage evaluation program according to the present disclosure have the following configurations.
[1] A model usage evaluation method for evaluating use of an inference model that is generated by machine learning training and inputs information based on an image, the model usage evaluation method including:
   a target image feature amount acquisition step of acquiring a feature amount of a target image used as an input to the inference model;
   a training image feature amount acquisition step of acquiring a feature amount of a training image used for training for generating the inference model; and
   an evaluation step of comparing the feature amount of the target image acquired in the target image feature amount acquisition step with the feature amount of the training image acquired in the training image feature amount acquisition step to evaluate the use of the inference model for the target image.
[2] The model usage evaluation method according to [1], in which, in the target image feature amount acquisition step, the target image is acquired, and information based on the acquired target image is input to a feature amount acquisition model generated by machine learning training to acquire the feature amount of the target image.
[3] The model usage evaluation method according to [2], in which the feature amount acquisition model is a model outputting a feature vector which is a feature amount of an image related to input information.
[4] The model usage evaluation method according to any one of [1] to [3], in which, in the evaluation step, a distance or angle between the feature amount of the target image and the feature amount of the training image is calculated in order to compare the feature amounts.
[5] The model usage evaluation method according to any one of [1] to [4], in which, in the evaluation step, it is determined whether or not the feature amount of the target image is included in a class of the training image generated from the feature amount of the training image in order to compare the feature amounts.
[6] The model usage evaluation method according to any one of [1] to [5], in which the inference model is a model used to remove noise from an image related to input information.
[7] The model usage evaluation method according to any one of [1] to [6], in which the inference model is a model used to detect an abnormality in an image related to input information.
[8] The model usage evaluation method according to any one of [1] to [7], in which the inference model is a model used to estimate a focus position at a time of focusing corresponding to an image related to input information.
[9] The model usage evaluation method according to any one of [1] to [8], in which, in the evaluation step, as the evaluation of the use of the inference model for the target image, it is determined whether or not the use of the inference model for the target image is appropriate or whether or not the inference model needs to be retrained.
[10] A model usage evaluation system for evaluating use of an inference model that is generated by machine learning training and inputs information based on an image, the model usage evaluation system including:
   a target image feature amount acquisition means for acquiring a feature amount of a target image used as an input to the inference model;
   a training image feature amount acquisition means for acquiring a feature amount of a training image used for training for generating the inference model; and
   an evaluation means for comparing the feature amount of the target image acquired by the target image feature amount acquisition means with the feature amount of the training image acquired by the training image feature amount acquisition means to evaluate the use of the inference model for the target image.
[11] A model usage evaluation program causing a computer to operate as a model usage evaluation system for evaluating use of an inference model that is generated by machine learning training and inputs information based on an image, the model usage evaluation program causing the computer to function as:
   a target image feature amount acquisition means for acquiring a feature amount of a target image used as an input to the inference model;
   a training image feature amount acquisition means for acquiring a feature amount of a training image used for training for generating the inference model; and
   an evaluation means for comparing the feature amount of the target image acquired by the target image feature amount acquisition means with the feature amount of the training image acquired by the training image feature amount acquisition means to evaluate the use of the inference model for the target image.

### Reference Signs List

10: model usage evaluation system, 11: target image feature amount acquisition unit, 12: training image feature amount acquisition unit, 13: evaluation unit, 100: model usage evaluation program, 101: target image feature amount acquisition module, 102: training image feature amount acquisition module, 103: evaluation module, 110: recording medium, 111: program storage area.

## Claims

1. A model usage evaluation method for evaluating use of an inference model that is generated by machine learning training and inputs information based on an image, the model usage evaluation method comprising:
a target image feature amount acquisition step of acquiring a feature amount of a target image used as an input to the inference model;
a training image feature amount acquisition step of acquiring a feature amount of a training image used for training for generating the inference model; and
an evaluation step of comparing the feature amount of the target image acquired in the target image feature amount acquisition step with the feature amount of the training image acquired in the training image feature amount acquisition step to evaluate the use of the inference model for the target image.

2. The model usage evaluation method according to claim 1,
wherein, in the target image feature amount acquisition step, the target image is acquired, and information based on the acquired target image is input to a feature amount acquisition model generated by machine learning training to acquire the feature amount of the target image.

3. The model usage evaluation method according to claim 2,
wherein the feature amount acquisition model is a model outputting a feature vector which is a feature amount of an image related to input information.

4. The model usage evaluation method according to claim 1 or 2,
wherein, in the evaluation step, a distance or angle between the feature amount of the target image and the feature amount of the training image is calculated in order to compare the feature amounts.

5. The model usage evaluation method according to claim 1 or 2,
wherein, in the evaluation step, it is determined whether or not the feature amount of the target image is included in a class of the training image generated from the feature amount of the training image in order to compare the feature amounts.

6. The model usage evaluation method according to claim 1 or 2,
wherein the inference model is a model used to remove noise from an image related to input information.

7. The model usage evaluation method according to claim 1 or 2,
wherein the inference model is a model used to detect an abnormality in an image related to input information.

8. The model usage evaluation method according to claim 1 or 2,
wherein the inference model is a model used to estimate a focus position at a time of focusing corresponding to an image related to input information.

9. The model usage evaluation method according to claim 1 or 2,
wherein, in the evaluation step, as the evaluation of the use of the inference model for the target image, it is determined whether or not the use of the inference model for the target image is appropriate or whether or not the inference model needs to be retrained.

10. A model usage evaluation system for evaluating use of an inference model that is generated by machine learning training and inputs information based on an image, the model usage evaluation system comprising:
a target image feature amount acquisition means for acquiring a feature amount of a target image used as an input to the inference model;
a training image feature amount acquisition means for acquiring a feature amount of a training image used for training for generating the inference model; and
an evaluation means for comparing the feature amount of the target image acquired by the target image feature amount acquisition means with the feature amount of the training image acquired by the training image feature amount acquisition means to evaluate the use of the inference model for the target image.

11. A model usage evaluation program causing a computer to operate as a model usage evaluation system for evaluating use of an inference model that is generated by machine learning training and inputs information based on an image, the model usage evaluation program causing the computer to function as:
a target image feature amount acquisition means for acquiring a feature amount of a target image used as an input to the inference model;
a training image feature amount acquisition means for acquiring a feature amount of a training image used for training for generating the inference model; and
an evaluation means for comparing the feature amount of the target image acquired by the target image feature amount acquisition means with the feature amount of the training image acquired by the training image feature amount acquisition means to evaluate the use of the inference model for the target image.
